(19) **Europäisches Patentamt / European Patent Office / Office européen des brevets**

(11) **EP 4 482 232 A1**

(12) **EUROPEAN PATENT APPLICATION**
published in accordance with Art. 153(4) EPC

(43) Date of publication:
25.12.2024 Bulletin 2024/52

(21) Application number: 23769446.8

(22) Date of filing: 18.01.2023

(51) International Patent Classification (IPC):
*H04W 72/00* (2023.01)

(52) Cooperative Patent Classification (CPC):
H04B 7/185; H04W 52/02; H04W 72/00

(86) International application number:
PCT/CN2023/073015

(87) International publication number:
WO 2023/173935 (21.09.2023 Gazette 2023/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.03.2022 CN 202210255682

(71) Applicant: Huawei Technologies Co., Ltd.
Shenzhen, Guangdong 518129 (CN)

(72) Inventors:
• LUO, Hejia
  Shenzhen, Guangdong 518129 (CN)
• MENG, Xian
  Shenzhen, Guangdong 518129 (CN)
• WANG, Xiaolu
  Shenzhen, Guangdong 518129 (CN)
• WANG, Jun
  Shenzhen, Guangdong 518129 (CN)

(74) Representative: Körber, Martin Hans
Mitscherlich PartmbB
Patent- und Rechtsanwälte
Karlstraße 7
80333 München (DE)

(54) **COMMUNICATION METHOD, APPARATUS, AND SYSTEM**

(57) This application provides a communication method, apparatus, and system, to resolve a problem of frequently adjusting a time-frequency resource in a non-terrestrial communication network, to improve efficiency and reliability of communication between a non-terrestrial transmission point and a terminal device, and reduce power consumption of the terminal device. This application may be applied to the non-terrestrial communication network and the terminal device. The non-terrestrial communication network includes a cell set. The cell set includes a plurality of non-terrestrial transmission points, and the plurality of non-terrestrial transmission points have a same time-frequency resource. The method includes: sending information about the cell set, where the information about the cell set includes identification information of the cell set, resource configuration information of the cell set, and position information of at least one transmission point in the plurality of non-terrestrial transmission points; and then communicating, by the cell set, with the terminal device.

FIG. 2

## Description

This application claims priority to Chinese Patent Application No. 202210255682.5, filed with the China National Intellectual Property Administration on March 15, 2022 and entitled "COMMUNICATION METHOD, APPARATUS, AND SYSTEM", which is incorporated herein by reference in its entirety.

## TECHNICAL FIELD

This application relates to the communication field, and in particular, to a communication method, apparatus, and system.

## BACKGROUND

Compared with a terrestrial communication system, a non-terrestrial network (non-terrestrial network, NTN) communication system has features of a large coverage area and flexible networking. Therefore, non-terrestrial network communication is booming.

The NTN communication system may use a device such as a satellite, an uncrewed aerial vehicle, a high altitude platform station, or a water surface ship as a transmission point (transmission point, TRP) for networking, to provide a service such as a data transmission service or a voice communication service for user equipment (user equipment, UE). Satellites include a low earth orbit (low earth orbit, LEO) satellite, a geostationary earth orbit (geostationary earth orbit, GEO) satellite, and a medium earth orbit (medium earth orbit, MEO) satellite. The LEO satellite has a lower orbital height than the GEO satellite and the MEO satellite, and the LEO satellite has advantages of a small data propagation delay, a small transmission loss, and low launch costs. Therefore, to improve a signal processing capability and a communication throughput of an NTN, the non-terrestrial network communication system usually uses the LEO satellite for networking.

However, when the non-terrestrial network communication system communicates with a terminal device, there is a phenomenon that the terminal device frequently adjusts a time-frequency resource. Consequently, a technical problem of high signaling overheads of the non-terrestrial network and high measurement overheads of the terminal device is caused, and efficiency of communication between the non-terrestrial communication network and the terminal device is low.

## SUMMARY

Embodiments of this application provide a communication method, apparatus, and system, to resolve a problem that a terminal device frequently adjusts a time-frequency resource in a coverage area of a non-terrestrial communication network, to reduce signaling overheads of the non-terrestrial communication network and measurement overheads of the terminal device, improve efficiency and reliability of communication between the non-terrestrial communication network and the terminal device, and reduce power consumption of the terminal device.

To achieve the foregoing objective, the following technical solutions are used in this application.

According to a first aspect, a communication method is provided. The communication method is applicable to a terminal device. The communication method includes: obtaining information about a cell set, where the cell set includes a plurality of non-terrestrial transmission points, the plurality of non-terrestrial transmission points have a same time-frequency resource, and the information about the cell set includes identification information of the cell set, resource configuration information of the cell set, and position information of at least one transmission point in the plurality of non-terrestrial transmission points; and accessing, by the terminal device, the cell set.

Based on the communication method according to the first aspect and the following second aspect, the non-terrestrial communication network includes the cell set, and the plurality of non-terrestrial transmission points in the cell set have the same time-frequency resource. After the terminal device completes initial synchronization by using identification information for cell identification, the terminal device accesses the cell set based on the resource configuration information of the cell set and the position information of the transmission point. When communicating with the non-terrestrial transmission point in the accessed cell set, the terminal device can communicate with different non-terrestrial transmission points by using the same time-frequency resource. In this way, in a process of communication between the terminal device and different transmission points in a same cell set, frequency of adjusting the time-frequency resource is reduced, frequency of sending signaling related to time-frequency resource adjustment is reduced, and signaling exchange between the cell set and the terminal device is reduced, so that communication efficiency and reliability of the non-terrestrial communication network are improved, signaling overheads for measurement of the terminal device can be reduced, and power consumption of the terminal device is reduced.

In a possible implementation, the accessing the cell set may include: accessing a cell set having longest remaining coverage time in a plurality of cell sets, where the remaining coverage time is determined based on information about each cell set. In this way, the terminal device accesses the cell set having the longest remaining coverage time, so that duration of camping on the cell set by the terminal device can be increased, a probability of handover or reselection between cell sets is reduced, and overheads of sending signaling related to the handover or the reselection between the cell sets are reduced, so that communication efficiency and reliability are improved, a quantity of measurement times of the terminal device can be reduced, and power consumption of the terminal device is reduced.

In a possible implementation, a coverage area of the cell set is fixed relative to the ground. In this way, in a process in which each non-terrestrial transmission point in the cell set moves, based on a moving direction, to a position of an adjacent transmission point corresponding to the non-terrestrial transmission point, a coverage area of the entire cell set for the ground remains fixed. Further, the terminal device has a fixed time-frequency resource adjustment rule when moving in the coverage area corresponding to the cell set, so that a quantity of time-frequency resource adjustment times can be reduced, frequency of sending signaling related to the time-frequency resource adjustment is reduced, and signaling exchange between the cell set and the terminal device is reduced, so that communication efficiency and reliability of the non-terrestrial communication network are improved, signaling overheads for measurement of the terminal device can be reduced, and power consumption of the terminal device is reduced.

In a possible implementation, at any moment, coverage areas of at least two transmission points in the plurality of non-terrestrial transmission points are contiguous. In other words, when the coverage areas of the two transmission points are contiguous, the time-frequency resource may not be changed in the contiguous coverage areas, so that reliability of communication between a terrestrial communication network and the terminal device can be improved. In addition, signaling overheads related to the time-frequency resource adjustment for the cell set can be reduced, network resources of the non-terrestrial communication network are saved, and efficiency of communication between the terrestrial network and the terminal device is improved.

In a possible implementation, the position information of the at least one transmission point includes: first position information and position variation information of the plurality of non-terrestrial transmission points, where the position variation information is variation information of the plurality of non-terrestrial transmission points relative to the first position information. In other words, the terminal device may calculate a real-time position of any non-terrestrial transmission point based on the first position information, for example, a position parameter and the position variation information of the non-terrestrial transmission point, and the non-terrestrial transmission point sends the first position information. Based on this, a real-time position of each non-terrestrial transmission point may be obtained by sending only position variation information of each non-terrestrial transmission point, and all position parameters that are of each non-terrestrial transmission point and that indicate position information may not need to be sent each time. In this way, signaling overheads for describing transmission of the non-terrestrial transmission point can be reduced, network resources on the non-terrestrial transmission point are saved, and efficiency of communication between the non-terrestrial transmission point and the terminal device is improved.

According to a second aspect, a communication method is provided. The communication method is applicable to a non-terrestrial communication network. The non-terrestrial communication network includes a cell set, the cell set includes a plurality of non-terrestrial transmission points, and the plurality of non-terrestrial transmission points have a same time-frequency resource. The communication method includes: sending information about the cell set, where the information about the cell set includes identification information of the cell set, resource configuration information of the cell set, and position information of at least one transmission point in the plurality of non-terrestrial transmission points; and communicating with a terminal device.

In a possible implementation, a coverage area of the cell set is fixed relative to the ground.

In a possible implementation, at any moment, coverage areas of at least two transmission points in the plurality of non-terrestrial transmission points are contiguous.

In a possible implementation, the non-terrestrial transmission point may include a satellite. In this way, when the non-terrestrial transmission point is the satellite, a communication coverage area can be expanded and networking flexibility can be improved.

Further, adjacent satellites may satisfy:

$$\frac{\Delta AOP}{\omega_s} = \frac{\Delta RAAN}{\omega_e}$$

. $\Delta RAAN$ is an angular interval between ascending nodes of the adjacent satellites, $\Delta AOP$ is a true anomaly interval between the adjacent satellites, $\omega_s$ is an angular velocity of the satellite revolving around the earth, and $\omega_e$ is an angular velocity of earth rotation. When a more accurate orbit parameter is used for description, the adjacent satellites may further satisfy:

$$\frac{\Delta AOP}{\omega_s + M_0 + \dot{\omega}} = \frac{\Delta RAAN}{\omega_e - \dot{\Omega}}$$

. $\dot{\Omega}$ is an orbital perturbation of a right ascension of the ascending node, $M_0$ is an orbital perturbation of a mean anomaly, and $\dot{\omega}$ is an orbital perturbation of an argument of perigee. In this way, in a process in which each satellite in the cell set moves, based on a moving direction, to a position of an adjacent satellite corresponding to the satellite, a coverage area of the entire cell set for the ground remains fixed.

Further, the adjacent satellites may further satisfy:

$$\frac{\Delta AOP}{\Delta RAAN}$$

is a rational number.

In a possible implementation, the position information of the at least one transmission point includes: first position information and position variation information of the plurality of non-terrestrial transmission points. The position variation information is variation information of the plurality of non-terrestrial transmission points relative to the first position information.

According to a third aspect, a communication apparatus is provided. The communication apparatus includes: a transceiver module and a processing module. The transceiver module is configured to obtain information about a cell set. The cell set includes a plurality of non-terrestrial transmission points, the plurality of non-terrestrial transmission points have a same time-frequency resource, and the information about the cell set includes identification information of the cell set, resource configuration information of the cell set, and position information of at least one transmission point in the plurality of non-terrestrial transmission points. The processing module is configured to access the cell set.

In a possible implementation, the processing module of the communication apparatus according to the third aspect may be configured to access a cell set having longest remaining coverage time in a plurality of cell sets, where the remaining coverage time is determined based on information about each cell set.

In a possible implementation, a coverage area of the cell set corresponding to the communication apparatus according to the third aspect is fixed relative to the ground.

In a possible implementation, for the communication apparatus according to the third aspect, at any moment, coverage areas of at least two transmission points in the plurality of non-terrestrial transmission points are contiguous.

Further, the position information of the at least one transmission point corresponding to the communication apparatus according to the third aspect includes: first position information and position variation information of the plurality of non-terrestrial transmission points, where the position variation information is variation information of the plurality of non-terrestrial transmission points relative to the first position information.

It should be noted that, the communication apparatus according to the third aspect may be a terminal device, may be a chip (system) or another part or component that may be disposed in the terminal device, or may be an apparatus including the terminal device. This is not limited in this application.

It should be understood that the communication apparatus according to the third aspect includes a corresponding module, unit, or means (means) for implementing the communication method according to the first aspect. The module, the unit, or the means may be implemented by hardware, software, or hardware executing corresponding software. The hardware or the software includes one or more modules or units configured to perform functions in the communication method according to the first aspect.

In addition, for technical effects of the communication apparatus provided in the third aspect, refer to the technical effects of the communication method provided in the first aspect. Details are not described herein again.

According to a fourth aspect, a communication apparatus is provided. The communication apparatus is applicable to a non-terrestrial communication network. The non-terrestrial communication network includes a cell set, the cell set includes a plurality of non-terrestrial transmission points, and the plurality of non-terrestrial transmission points have a same time-frequency resource. The communication apparatus includes: a transceiver module and a processing module. The transceiver module is configured to send information about the cell set, where the information about the cell set includes identification information of the cell set, resource configuration information of the cell set, and position information of at least one transmission point in the plurality of non-terrestrial transmission points. The processing module is configured to communicate with a terminal device.

Optionally, a coverage area of the cell set corresponding to the communication apparatus according to the fourth aspect is fixed relative to the ground.

Optionally, for the communication apparatus according to the fourth aspect, at any moment, coverage areas of at least two transmission points in the plurality of non-terrestrial transmission points are contiguous.

Optionally, the non-terrestrial transmission point corresponding to the communication apparatus according to the fourth aspect may include a satellite.

Further, adjacent satellites corresponding to the communication apparatus according to the fourth aspect

may satisfy: $\dfrac{\Delta AOP}{\omega_s} = \dfrac{\Delta RAAN}{\omega_e}$ . $\Delta RAAN$ is an angular interval between ascending nodes of the adjacent satellites, $\Delta AOP$ is a true anomaly interval between the adjacent satellites, $\omega_s$ is an angular velocity of the satellite revolving around the earth, and $\omega_e$ is an angular velocity of earth rotation. When a more accurate orbit parameter is used for description, the adjacent satellites may further

satisfy: $\dfrac{\Delta AOP}{\omega_s + M_0 + \dot{\omega}} = \dfrac{\Delta RAAN}{\omega_e - \dot{\Omega}}$ . $\dot{\Omega}$ is an orbital perturbation of a right ascension of the ascending node, $M_0$ is an orbital perturbation of a mean anomaly, and $\dot{\omega}$ is an orbital perturbation of an argument of perigee.

Further, the adjacent satellites corresponding to the communication apparatus according to the fourth aspect may further satisfy: $\dfrac{\Delta AOP}{\Delta RAAN}$ is a rational number.

Optionally, the position information of the at least one transmission point corresponding to the communication apparatus according to the fourth aspect includes: first position information and position variation information of the plurality of non-terrestrial transmission points, where the position variation information is variation information of the plurality of non-terrestrial transmission points relative to the first position information.

It should be noted that the communication apparatus according to the fourth aspect may be a non-terrestrial transmission point that belongs to a same cell set in the non-terrestrial communication network, for example, a satellite, an uncrewed aerial vehicle, a high altitude platform station, or a water surface ship, or may be a chip (system) or another part or component that may be disposed in the non-terrestrial transmission point, or may be an apparatus including the non-terrestrial transmission point. This is not limited in this application.

It should be understood that the communication apparatus according to the fourth aspect includes a corresponding module, unit, or means (means) for implementing the communication method according to the second aspect. The module, the unit, or the means may be implemented by hardware, software, or hardware executing corresponding software. The hardware or the software includes one or more modules or units configured to perform functions in the communication method according to the second aspect.

In addition, for technical effects of the communication apparatus according to the fourth aspect, refer to the technical effects of the communication method according to the second aspect. Details are not described herein again.

According to a fifth aspect, a communication apparatus is provided. The communication apparatus includes a processor. The processor is coupled to a memory, the memory stores program instructions, and when the program instructions stored in the memory are executed by the processor, the processor is configured to perform the method according to any one of the first aspect and possible design manners of the first aspect or the method according to any one of the second aspect and possible design manners of the second aspect.

According to a sixth aspect, a communication apparatus is provided. The communication apparatus includes: a processor and a memory. The memory is configured to store computer instructions. When the processor executes the computer instructions, the communication apparatus is enabled to perform the method according to any one of the first aspect and possible design manners of the first aspect or the method according to any one of the second aspect and possible design manners of the second aspect.

According to a seventh aspect, a communication apparatus is provided. The communication apparatus includes: a processor and an interface circuit. The interface circuit is configured to receive code instructions and send the code instructions to the processor. The processor is configured to run the code instructions to run the method according to any one of the first aspect and possible design manners of the first aspect or the method according to any one of the second aspect and possible design manners of the second aspect.

According to an eighth aspect, a communication apparatus is provided. The communication apparatus includes: a processor and a transceiver. The transceiver is configured to exchange information between the communication apparatus and another communication apparatus. The processor executes program instructions, to perform the method according to any one of the first aspect and possible design manners of the first aspect or the method according to any one of the second aspect and possible design manners of the second aspect.

It should be noted that, the communication apparatuses according to the fifth aspect to the eighth aspect each may be a terminal device or a non-terrestrial transmission point that belongs to a same cell set in a non-terrestrial communication network, or each may be a chip (system) or another part or component that may be disposed in the terminal device or the non-terrestrial transmission point that belongs to the same cell set in the non-terrestrial communication network, or each may be an apparatus including the terminal device or the non-terrestrial transmission point that belongs to the same cell set in the non-terrestrial communication network. This is not limited in this application.

In addition, for technical effects of the communication apparatuses according to the fifth aspect to the eighth aspect, refer to the technical effects of the communication methods according to the first aspect and the second aspect. Details are not described herein again.

According to a ninth aspect, a communication apparatus is provided. The communication apparatus includes: an input/output interface and a logic circuit. The input/output interface is configured to perform sending and receiving operations in the method according to any one of the first aspect and possible design manners of the first aspect or the method according to any one of the second aspect and possible design manners of the second aspect. The logic circuit is configured to perform the method according to any one of the first aspect and possible design manners of the first aspect or the method according to any one of the second aspect and possible design manners of the second aspect.

According to a tenth aspect, a computer-readable storage medium is provided. When a computer program or instructions are run on a computer, the computer is enabled to perform the method according to any one of the first aspect and possible design manners of the first aspect or the method according to any one of the second aspect and possible design manners of the second aspect.

According to an eleventh aspect, a computer program product is provided. The computer program product includes a computer program or instructions. When the computer program or the instructions are run on a computer, the computer is enabled to perform the method according to any one of the first aspect and possible design manners of the first aspect or the method according to any one of the second aspect and possible design manners of the second aspect.

According to a twelfth aspect, a communication system is provided. The communication system includes a plurality of non-terrestrial transmission points, the plurality of non-terrestrial transmission points in a same cell set have a same time-frequency resource, and the communication system is configured to perform the method according to any one of the second aspect and possible design manners of the second aspect.

According to a thirteenth aspect, a communication system is provided. The communication system includes a plurality of non-terrestrial transmission points and a plurality of terminal devices. The plurality of non-terrestrial transmission points in a same cell set have a same time-frequency resource. The terminal device is configured to perform the method according to any one of the first aspect and possible design manners of the first aspect. The non-terrestrial transmission point is configured to perform the method according to any one of the second aspect and possible design manners of the second aspect.

## BRIEF DESCRIPTION OF DRAWINGS

FIG. 1 is a diagram of an architecture of a communication system according to an embodiment of this application;

FIG. 2 is a schematic flowchart of a communication method according to an embodiment of this application;

FIG. 3 is a first diagram of a moving trajectory of a satellite according to an embodiment of this application;

FIG. 4 is a first diagram of an application scenario to which a communication method according to an embodiment of this application is applicable;

FIG. 5 is a second diagram of an application scenario to which a communication method according to an embodiment of this application is applicable;

FIG. 6 is a third diagram of an application scenario to which a communication method according to an embodiment of this application is applicable;

FIG. 7 is a second diagram of a moving trajectory of a satellite according to an embodiment of this application;

FIG. 8 is a fourth diagram of an application scenario to which a communication method according to an embodiment of this application is applicable;

FIG. 9 is a fifth diagram of an application scenario to which a communication method according to an embodiment of this application is applicable;

FIG. 10 is a sixth diagram of an application scenario to which a communication method according to an embodiment of this application is applicable;

FIG. 11 is a seventh diagram of an application scenario to which a communication method according to an embodiment of this application is applicable;

FIG. 12 is a first diagram of a structure of a communication apparatus according to an embodiment of this application;

FIG. 13 is a second diagram of a structure of a communication apparatus according to an embodiment of this application;

FIG. 14 is a third diagram of a structure of a communication apparatus according to an embodiment of this application; and

FIG. 15 is a fourth diagram of a structure of a communication apparatus according to an embodiment of this application.

## DESCRIPTION OF EMBODIMENTS

The following describes the technical solutions in this application with reference to the accompanying drawings.

The technical solutions in embodiments of this application may be applied to various communication systems, for example, a non-terrestrial network communication system and a water surface ship communication system.

All aspects, embodiments, or features are presented in this application by describing a system that may include a plurality of devices, components, and modules, and the like. It should be appreciated and understood that, each system may include another device, component, and module, and the like, and/or may include none of devices, components, and modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, use of the term "example" is intended to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "relevant (corresponding, relevant)", and "corresponding (corresponding)" may sometimes be interchangeably used. It should be noted that meanings expressed by the terms are consistent when differences of the terms are not emphasized.

In embodiments of this application, a subscript, for example, $W_1$, may sometimes be written in an incorrect form, for example, W1. Meanings expressed by the forms are consistent when differences of the forms are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

Currently, 5G communication in terrestrial communication enters a commercial deployment phase, and 6G-related technology research and development is in the ascendant. Compared with a terrestrial communication system, a non-terrestrial communication system has features of a large coverage area and flexible networking. In particular, in a scenario in which terrestrial communication is unavailable due to an unexpected natural disaster or another force majeure factor, non-terrestrial communication plays a key role. The non-terrestrial communication includes non-terrestrial network (non-terrestrial network, NTN) communication and water surface ship communication or another case in which communication is not performed on land. An NTN communication system may use an uncrewed aerial vehicle, a high altitude platform station (high altitude platform station, HAPS), or a satellite to perform networking.

Satellites include a low earth orbit (low earth orbit, LEO) satellite, geostationary earth orbit (geostationary earth orbit, GEO) satellite communication, and a medium earth orbit (medium earth orbit, MEO) satellite. Compared with the geostationary earth orbit (geostationary earth orbit, GEO) satellite communication and the medium earth orbit (medium earth orbit, MEO) satellite, the low earth orbit (low earth orbit, LEO) satellite has advantages of a small propagation delay, a small transmission loss, and low launch costs, and has a very wide application prospect.

However, when the LEO satellite communicates with a terminal device, earth rotation, revolution of the LEO satellite around the earth, or another factor causes frequent changes in a coverage area of the LEO satellite on the ground. Consequently, the terminal device is frequently handed over to the accessed LEO satellite, and further, the LEO satellite frequently sends handover signaling. In addition, an increase in a quantity of measurement times of the terminal device causes a problem of high satellite signaling overheads and high measurement overheads of the terminal device, and finally causes a technical problem of low efficiency of communication between the LEO satellite and the terminal device. Similarly, when the uncrewed aerial vehicle, the HAPS, or the water surface ship communicates with the terminal device, a problem similar to that of the LEO satellite also exists.

To resolve the foregoing technical problem, embodiments of this application provide a communication method, apparatus, and system. For ease of understanding of embodiments of this application, a communi-

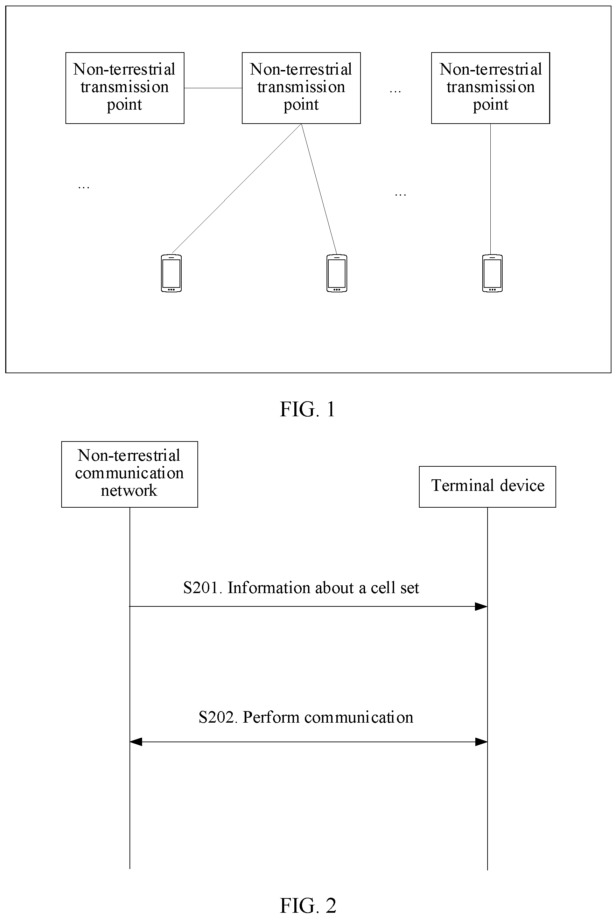

nication system shown in FIG. 1 is first used as an example to describe in detail a communication system to which embodiments of this application are applicable.

The communication method provided in embodiments of this application may be applied to various communication systems, for example, a satellite communication system, an internet of things (internet of things, IoT), a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a long term evolution (long term evolution, LTE) system, and a fifth generation (5G) communication system, for example, 5G new radio (new radio, NR) and three application scenarios of a 5G mobile communication system: enhanced mobile broadband (enhanced mobile broadband, eMBB), ultra-reliable and low latency communications (ultra-reliable and low latency communications, uRLLC), and massive machine type communications (massive machine type communications, mMTC), a device-to-device (device-to-device, D2D) communication system, a machine-to-machine (machine-to-machine, M2M) communication system, an internet of vehicles communication system, or another communication system or a future communication system. This is not specifically limited in embodiments of this application.

It should be noted that a satellite in the following embodiments of this application is a non-GEO satellite, and may include an LEO satellite or a very low earth orbit (very low earth orbit, VLEO) satellite. The VLEO satellite has a lower orbital height than the LEO satellite. This is not limited herein.

For example, FIG. 1 is a diagram of an architecture of a communication system to which a communication method according to an embodiment of this application is applicable. As shown in FIG. 1, the communication system includes a plurality of non-terrestrial transmission points and a terminal device, and the plurality of non-terrestrial transmission points in a same cell set have a same time-frequency resource. There may be a plurality of terminal devices. A quantity of terminal devices is not limited herein.

Further, the cell set includes a hyper cell, and a plurality of non-terrestrial transmission points in the hyper cell not only have a same time-frequency resource, but also have a same cell identifier.

It may be understood that, when the cell set is a non-hyper cell, only time-frequency resource consistency needs to be ensured in the cell set. A procedure such as a handover procedure is still performed according to a layer 3 (layer 3, L3) signaling procedure, and high-speed real-time communication between transmission points is not required. This is easier than hardware implementation of the hyper cell.

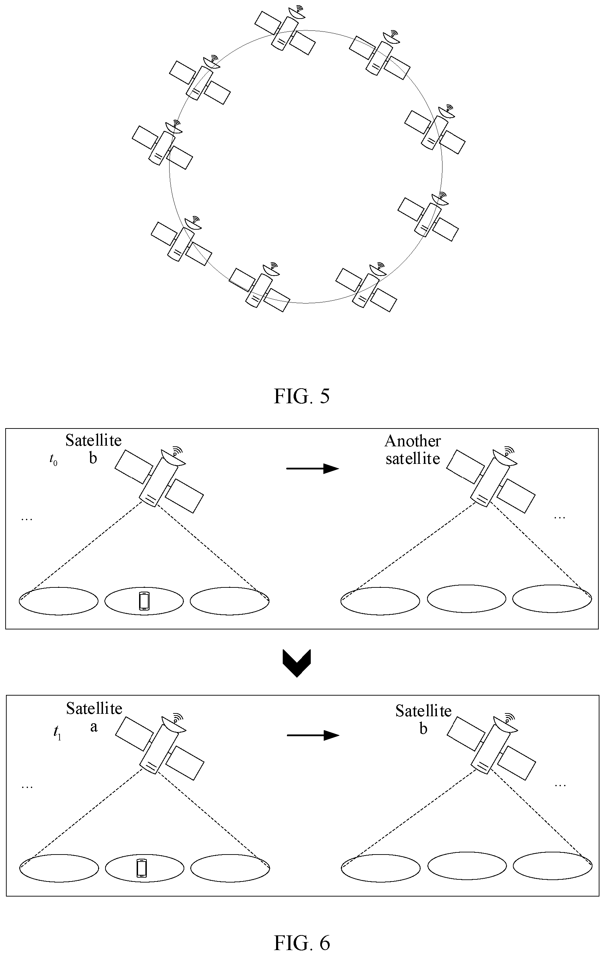

It should be understood that the cell set may be in a time dimension. For example, in some areas, a service is currently provided by a satellite transmission point in the cell set, and a service is subsequently provided by a next satellite in the set. When one or more satellites in the cell set provide a service for a coverage area or a terminal device in the coverage area, a subsequent satellite in the cell set does not start to provide a service for the coverage area or the terminal device in the coverage area, but the served terminal device may predict that the subsequent satellite may provide a same or similar service. The cell set may alternatively be implemented in space. For example, when the cell set is a hyper cell, a plurality of satellites are combined as transmission points (transmission points, TRPs) to serve in a form shown in FIG. 5.

The foregoing non-terrestrial transmission point may include a transmission point or a water surface ship in an NTN communication system, or a chip or a chip system in the transmission point in the NTN communication system, or a chip or a chip system on the water surface ship.

The transmission point in the NTN communication system includes a satellite, an uncrewed aerial vehicle, or a HAPS.

In addition, the non-terrestrial transmission point shown in FIG. 1 may alternatively be a cell corresponding to any non-terrestrial communication device. A specific form of the non-terrestrial transmission point is not limited herein.

In the communication system shown in FIG. 1, when the cell set is a non-hyper cell, a plurality of non-terrestrial transmission points in the cell set have a same time-frequency resource. After the terminal device completes synchronization by using identification information for cell identification, the terminal device accesses the cell set based on resource configuration information of the cell set and position information of the transmission point. When communicating with the non-terrestrial transmission point in the accessed cell set, the terminal device can communicate with different non-terrestrial transmission points by using the same time-frequency resource. In this way, in a process of communication between the terminal device and different transmission points in a same cell set, frequency of adjusting the time-frequency resource can be reduced, and frequency of sending signaling related to time-frequency resource adjustment can be reduced, so that communication efficiency and reliability of the communication system are improved, signaling exchange between the cell set and the terminal device is reduced, signaling overheads for measurement of the terminal device can be reduced, and power consumption of the terminal device is reduced.

In the communication system shown in FIG. 1, when the cell set is a hyper cell, a plurality of non-terrestrial transmission points in the hyper cell not only have a same time-frequency resource, but also have a same cell identifier. Because of a high communication rate of an inter-satellite link, when the terminal device communicates with the non-terrestrial transmission point in the accessed cell set, bottom-layer handover may be performed by using L1 and L2 signaling, to avoid L3 handover. In this way, a probability of L3 cell handover or cell reselection can be reduced, so that communication efficiency and reliability of a non-terrestrial communication network are improved, and power consumption of the terminal device is reduced.

It may be understood that the time-frequency resource includes a time-frequency domain resource related to communication establishment, such as a bandwidth, a frequency, a broadcast beam resource, or a beam resource. In the communication system shown in FIG. 1, the identification information of the cell set may be any information for distinguishing between cell sets. In an implementation, the identification information of the cell set includes a physical cell identifier (physical cell ID, PCI) and a cell global identifier (cell global ID, CGI).

For example, the terminal device in FIG. 1 is a mobile phone.

The terminal device includes a device that provides a voice and/or data connectivity for a user. Specifically, the terminal device includes a device that provides a voice for a user, or includes a device that provides data connectivity for a user, or includes a device that provides a voice and data connectivity for a user. For example, the terminal device may include a handheld device having a wireless connection function or a processing device connected to a wireless modem. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device (device-to-device, D2D) terminal device, a vehicle to everything (vehicle to everything, V2X) terminal device, a machine-to-machine/machine type communications (machine-to-machine/machine-type communications, M2M/MTC) terminal device, an internet of things (internet of things, IoT) terminal device, a light terminal device (light UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (also referred to as a "cellular" phone), a computer having a mobile terminal device, or a portable, pocket-sized, handheld, or a computer-embedded mobile apparatus, for example, a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability, for example, an information sensing device such as a barcode, radio frequency identification (radio frequency identification, RFID), a sensor, a global positioning system (global positioning system, GPS), or a laser scanner.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or a part of functions without depending on a smartphone, for example, smart watches or smart glasses, and includes a device that is dedicated to only one type of application function and that needs to collaboratively work with another device such as a smartphone, for example, various smart bands, smart helmets, or smart jewelry for monitoring physical signs.

If the various terminal devices described above are located in a vehicle (for example, placed in the vehicle or mounted in the vehicle), the terminal devices may all be considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood that any device that can perform data communication with a base station may be considered as the terminal device.

It should be understood that FIG. 1 is merely a simplified diagram of an example for ease of understanding. The communication system may further include another network device that is not shown in FIG. 1. The another network device may be a related device in the core network.

It should be noted that, the solutions in embodiments of this application may alternatively be applied to another communication system, and a corresponding name may alternatively be replaced with a name of a corresponding function in the another communication system. The following specifically describes the communication method provided in embodiments of this application with reference to FIG. 2 to FIG. 11. A cell set in each of FIG. 1 to FIG. 11 is a non-hyper cell or a hyper cell. Meanings of the hyper cell and the non-hyper cell are consistent with those of the hyper cell and the non-hyper cell in related descriptions in FIG. 1, and details are not described herein again.

For example, FIG. 2 is a schematic flowchart of a communication method according to an embodiment of this application. The communication method is applicable to the non-terrestrial transmission point and the terminal device in FIG. 1.

The communication method includes the following steps.

S201. The non-terrestrial transmission point sends information about a cell set, and the terminal device obtains the information about the cell set.

The information about the cell set includes identification information of the cell set, resource configuration information of the cell set, and position information of at least one transmission point in a plurality of non-terrestrial transmission points.

Optionally, the information about the cell set may be sent in a broadcast manner or in another manner. The another manner may be a multicast manner or a groupcast manner. This is not limited herein.

Optionally, the terminal device may receive the information about the cell set sent by the cell set, or may obtain the information from a local cache.

The identification information of the cell set includes a PCI and a CGI.

The position information of the non-terrestrial transmission point may be any parameter that can determine a position and a moving trajectory of the transmission point.

For example, when the non-terrestrial transmission point is a satellite, position information of the satellite may be six Keplerian elements, and specifically includes: an orbital semi-major axis $a$, orbital eccentricity $e$, an orbital inclination $i$, a right ascension of an ascending node $\Omega$, an argument of periapsis $\omega$, and a perigee moment $t_p$.

The orbital semi-major axis $a$ is a sum of the semi-major axis of the earth and an orbital height. The orbit eccentricity $e$ is used to determine a shape of an orbit, and the orbital inclination $i$ is an included angle between the orbit and the equatorial plane of the earth. The right ascension of the ascending node (right ascension of the ascending node, RAAN) Q is an included angle between the ascending node of the satellite and the vernal equinox relative to the center of the earth. The argument of periapsis (argument of periapsis, AOP) $\omega$ is an opening angle between a perigee and the ascending node relative to the center of the earth, and is used to determine a position of the orbit in an orbit plane. The perigee moment $t_p$ indicates a moment at which the satellite passes the perigee.

In addition, when the non-terrestrial transmission point is a satellite, the perigee moment $t_p$ in the six Keplerian elements may be replaced with a true anomaly or a mean anomaly $M_0$. $M_0$ indicates a radial angle of the satellite moving along the orbit from the perigee, and is used to determine an initial position of the satellite in the orbit. The entire specification uses the true anomaly as an example for description.

Optionally, when the non-terrestrial transmission point is an uncrewed aerial vehicle, the position information of the non-terrestrial transmission point includes one or more of the following information: longitude and latitude coordinate information, uncrewed aerial vehicle flight trajectory information, a flight speed, an uncrewed aerial vehicle height, or flight posture information.

Optionally, when the non-terrestrial transmission point is a device that can move on a water surface, such as a ship, the position information of the non-terrestrial transmission point includes one or more of the following information: ship longitude and latitude coordinate information, ship moving trajectory information, or a ship moving speed.

Optionally, when the non-terrestrial transmission point is a HAPS, the position information of the non-terrestrial transmission point includes one or more of the following information: HAPS coordinate information, HAPS moving trajectory information, HAPS height information, or a HAPS moving speed.

Optionally, the position information of the at least one transmission point may include: first position information and position variation information of the plurality of non-terrestrial transmission points, where the position variation information is variation information of the plurality of non-terrestrial transmission points relative to the first position information.

The first position information may include a common position parameter of the non-terrestrial transmission point. The position variation information is a variation of the plurality of non-terrestrial transmission points relative to the first position information.

Optionally, when the non-terrestrial transmission point is a satellite, first position information of the satellite may be a common orbit parameter of all satellites in a same cell set, for example, $\{a,e,i,\Omega,\omega,M_0,\Delta AOP,\Delta RAAN\}$, where $a$, $e$, $i$, $\Omega$, $\omega$, and $M_0$ have same meanings as those described above, and details are not described herein again. $\Delta RAAN$ is an angular interval between ascending nodes of adjacent satellites, and may be understood as a difference between ascending node angles of the adjacent satellites. $\Delta AOP$ is a true anomaly interval between the adjacent satellites, and may be understood as a phase difference between positions of two adjacent satellites in respective orbits revolving around the earth.

Further, position variation information of a satellite a in the cell set may include $\Delta RAAN \times Index_a$ and $\Delta AOP \times Index_a$, and position information of the satellite a $\{a,e,i,\Omega + \Delta RAAN \times Index_a, \omega + \Delta AOP \times Index_a, M_0\}$ may

be obtained based on $\{a,e,i,\Omega,\omega,M_0,\Delta AOP,\Delta RAAN\}$, $\Delta RAAN \times Index_a$, and $\Delta AOP \times Index_a$. $Index_a$ is an index identifier of the satellite a, and is used to identify the satellite a. Naturally, an index identifier of a satellite x may be represented by $Index_x$.

Optionally, position variation information of a satellite a in the cell set may include $\Delta RAAN \times Index_a$ and $\Delta AOP \times Index_a$, and position information of the satellite a $\{a,e,i,\Omega + \Delta RAAN \times Index_a,\omega,M_0 + \Delta AOP \times Index_a\}$ may be obtained based on $\{a,e,i,\Omega,\omega,M_0,\Delta AOP,\Delta RAAN\}$, $\Delta RAAN \times Index_a$, and $\Delta AOP \times Index_a$.

It may be understood that the satellite sends $\{a,e,i,\Omega,\omega,M_0,\Delta AOP,\Delta RAAN\}$, and sends an index identifier $Index_x$ of each satellite, so that real-time position information of each satellite may be obtained. After the position information is sent, specific values of $\{a,e,i,\Omega,\omega,M_0,\Delta AOP,\Delta RAAN\}$ of each satellite may not be sent each time. In this way, signaling overheads for describing the real-time position information of each satellite can be reduced, network resources are saved, and efficiency of communication between the satellite and the terminal device is improved.

Optionally, the first position information $\{a,e,i,\Omega,\omega,M_0, \Delta AOP,\Delta RAAN\}$ and the index identifier $Index_x$ may be sent at the same time, or may not be sent at the same time. This is not limited herein.

Optionally, when the non-terrestrial transmission point is an uncrewed aerial vehicle, the first position information includes one or more of the following information of the uncrewed aerial vehicle at a moment $t_i$: longitude and latitude coordinate information, flight trajectory information, a flight speed, height information, or flight posture information. The position variation information may be a time variable, and position information of each uncrewed aerial vehicle at a current moment can be deduced based on the first position information and time variation information.

Optionally, when the non-terrestrial transmission point is a HAPS, the first position information includes one or more of the following information of the HAPS at a moment $t_i$: HAPS coordinate information, HAPS moving trajectory information, HAPS height information, or a HAPS moving speed. The position variation information may be a time variable, and position information of each HAPS at a current moment can be deduced based on the first position information and time variation information.

Optionally, when the non-terrestrial transmission point is a water surface ship, the position information of the non-terrestrial transmission point includes one or more of the following information: ship longitude and latitude coordinate information, ship moving trajectory information, or a ship moving speed. The position variation information may be a time variable, and position information of each ship at a current moment can be deduced based on the first position information and time variation information.

It may be understood that, when the non-terrestrial transmission point is an uncrewed aerial vehicle, a HAPS, or a water surface ship, a technical principle that the non-terrestrial transmission point can reduce signaling overheads is the same as that of the satellite, and details are not described herein again.

S202. The cell set communicates with the terminal device, and the terminal device accesses the cell set.

It may be understood that in step S202, after obtaining the information about the cell set, the terminal device completes initial synchronization between the terminal device and the non-terrestrial transmission point by using a synchronization sequence corresponding to the PCI in the identification information of the cell set. After the initial synchronization is completed, an available time-frequency resource in the cell set and a real-time position of a transmission point are obtained based on the resource configuration information of the cell set. The terminal device may estimate coverage time of the transmission point based on the real-time position. After measuring each time-frequency resource, the terminal device selects, with reference to the coverage time, an appropriate non-terrestrial transmission point for access.

In step S202, when the cell set is a non-hyper cell, because a same cell set has a same time-frequency resource, when the terminal device is located in the same cell set, the terminal device can communicate with different non-terrestrial transmission points by using the same time-frequency resource, so that adjustment of the time-frequency resource by the terminal device in a coverage area of the same cell set can be avoided, thereby reducing measurement overheads of the terminal device, further reduce power consumption of the terminal device, and improve a battery life of the terminal device.

In addition, a quantity of times that the terminal device switches a time-frequency resource or reselects a time-frequency resource is reduced, so that communication efficiency between a non-terrestrial communication network and the terminal device can be improved, signaling overheads of a time-frequency resource switching indication for the cell set can be reduced, network resources of the non-terrestrial communication network are saved, and efficiency of communication between the non-terrestrial communication network and the terminal device is improved.

In step S202, when the cell set is a hyper cell, a plurality of non-terrestrial transmission points in the hyper cell not only have a same time-frequency resource, but also have a same cell identifier. Because of a high communication rate of an inter-satellite link, when the terminal device communicates with the non-terrestrial transmission point in the accessed cell set, bottom-layer handover may be performed by using L1 and L2 signaling, to avoid L3 handover. In this way, a probability of L3 cell handover or cell reselection can be reduced, so that communication efficiency and reliability of the non-terrestrial communication network are improved, and power consumption of the terminal device is reduced.

Optionally, step S202 may include: The terminal device accesses a cell set having longest remaining coverage time in a plurality of cell sets.

The remaining coverage time may be determined based on information about each cell set. For example, when the non-terrestrial transmission point is a satellite, the information about the cell set sent by the satellite in step S201 includes $\Delta AOP$ and $\omega_s$ or $t_{px}$ and $\omega_s$. $\omega_s$ indicates an angular velocity of the satellite revolving around the earth, $\Delta AOP$ indicates a true anomaly interval between adjacent satellites, and $t_{px}$ indicates a perigee moment of a satellite x in an orbit.

Further, in an implementation, a coverage time interval $\Delta t$ between the adjacent satellites is calculated by

$$\Delta t = \frac{\Delta AOP}{\omega_s}$$

using a formula                         or a formula

$$\Delta t = \frac{t_{p_x} - t_{p_{x-1}}}{\omega_s}.$$

The coverage time interval $\Delta t$ is a time interval at which a current satellite of the terminal device accesses an adjacent satellite in a satellite moving direction, that is, communication duration of the terminal device in a current satellite coverage area. Remaining coverage time of the terminal device in the cell set can be estimated based on the coverage time interval $\Delta t$ and a quantity of remaining satellites that can provide a service in the cell set.

Optionally, the remaining coverage time of the cell set may be estimated based on time in which a last satellite that can provide a service in the cell set covers an area in which the terminal device is located. Alternatively, the remaining coverage time of the cell set may be notified to a user terminal by sending indication signaling through a last satellite that can provide a service in the cell set, and the terminal estimates the remaining coverage time of the cell set based on sending time of the indication signaling.

It may be understood that the terminal device accesses the cell set having the longest remaining coverage time, so that duration of camping on the cell set by the terminal device can be increased, a probability of handover or reselection between cell sets is reduced, and overheads of sending signaling related to the handover or the reselection between the cell sets are reduced, so that communication efficiency and reliability are improved, a quantity of measurement times of the terminal device can be reduced, and power consumption of the terminal device is reduced.

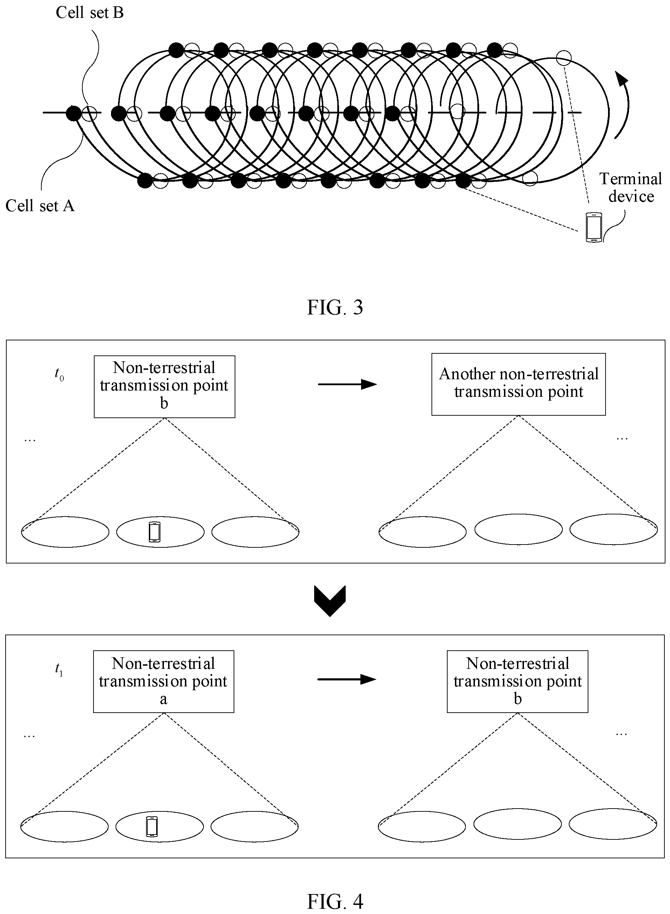

For example, FIG. 3 is a first diagram of a moving trajectory of a satellite according to an embodiment of this application. In FIG. 3, when the non-terrestrial transmission point is a satellite, the terminal device receives remaining coverage time of two different cell sets, or certainly may receive remaining time of more cell sets. An example in which the terminal device receives the remaining coverage time of the two different cell sets is used herein.

It can be learned from FIG. 3 that satellites in different cell sets have different moving trajectories, and different cell sets have respective corresponding remaining coverage time. There are two different cell sets in FIG. 3, including a cell set A including satellites represented by black dots and a cell set B including satellites represented by circles.

Further, in step S202, after estimating remaining coverage time of each cell set, the terminal device may select the cell set having the longest remaining coverage time for access, to further reduce a probability of handover of the terminal device between different cell sets, further improve communication efficiency and reliability, and reduce power consumption of the terminal device.

It may be understood that the remaining coverage time is not a unique indicator for the terminal device to select a cell set for access. In actual communication, indicators such as channel quality and a busy degree of the cell set may be comprehensively considered, and each indicator may be processed in a weighted manner, to obtain a comprehensive indicator result, and the cell set is selected based on the comprehensive indicator result for access. Certainly, different focuses are considered in different application scenarios. For example, when a handover indicator is mainly considered, a weight of the remaining coverage time may be configured to be larger to reduce a handover frequency.

Optionally, preconfiguration information may be set in the cell set and the terminal device. The preconfiguration information specifies a signaling set between the plurality of cell sets and the terminal device after the terminal device obtains remaining coverage time of the cell sets. For example, the signaling set indicates that the terminal device sorts the remaining coverage time of the plurality of cell sets, and selects the cell set with longest remaining coverage time for access. It should be noted that the preconfiguration information may be set based on an actual requirement. The foregoing lists only one possible form of different configuration information. This is not specified herein.

Optionally, the preconfiguration information may be sent in a broadcast manner.

When the non-terrestrial transmission point is an uncrewed aerial vehicle, a HAPS, or a water surface ship, the remaining coverage time of the cell set may alternatively be estimated based on a coverage time interval of one transmission point and a quantity of transmission points that can provide a service. Details are not described herein.

FIG. 4 to FIG. 11 are diagrams of application scenarios or orbits to which a communication method is applicable according to embodiments of this application. The communication method in FIG. 2 is applicable to any scenario or orbit shown in FIG. 4 to FIG. 11.

It should be noted that satellites in FIG. 4 and subsequent figures may work in a transparent transmission mode or a regenerative mode, and the communication method shown in FIG. 2 is applicable to satellites in the two working modes.

For example, FIG. 4 is a first diagram of an application scenario to which a communication method according to an embodiment of this application is applicable. As shown in FIG. 4, a coverage area of a cell set is fixed relative to the ground. Non-terrestrial transmission points in the cell set are moving, and a coverage area of any non-terrestrial transmission point a in the cell set at a moment $t_1$ is the same as a coverage area of a non-terrestrial transmission point b at a moment $t_0$. It can be learned that a coverage area of the entire cell set is fixed when observed at a fixed moment (for example, $t_0$ or $t_1$). The moment $t_0$ is a moment before the moment $t_1$, and the non-terrestrial transmission point b is an adjacent transmission point of the non-terrestrial transmission point a in a moving trajectory direction.

When the cell set is a non-hyper cell, because the non-terrestrial transmission points move regularly, the coverage areas of the cell set remain unchanged regularly. Therefore, after the non-terrestrial transmission point completes step S201, frequency of adjusting the time-frequency resource can be reduced, frequency of sending signaling related to time-frequency resource adjustment can be further reduced, and signaling exchange between the cell set and the terminal device can be reduced, so that communication efficiency and reliability of the non-terrestrial communication network are improved, signaling overheads for measurement of the terminal device can be reduced, and power consumption of the terminal device is reduced.

When the cell set is a hyper cell, a plurality of non-terrestrial transmission points in the hyper cell not only have a same time-frequency resource, but also have a same cell identifier. After the non-terrestrial transmission point completes step S201, the plurality of non-terrestrial transmission points in the hyper cell not only have a same time-frequency resource, but also have a same cell identifier. Because of a high communication rate of an inter-satellite link, when the terminal device communicates with the non-terrestrial transmission point in the accessed cell set, bottom-layer handover may be performed by using L1 and L2 signaling, to avoid L3 handover. In this way, a probability of L3 cell handover or cell reselection can be reduced, so that communication efficiency and reliability of the non-terrestrial communication network are improved, and power consumption of the terminal device is reduced.

For example, FIG. 5 is a second diagram of an application scenario to which a communication method according to an embodiment of this application is applicable. In a scenario in which satellites in FIG. 5 form a hyper cell around the earth, position parameters of these satellites may be represented as $\{a,e,i,\Omega,\omega,M_0, \Delta AOP,\Delta RAAN\}$. Meanings of the position parameters are the same as those of the position parameters $\{a,e,i,\Omega, \omega,M_0, \Delta AOP,\Delta RAAN\}$ described in the related description in FIG. 2, and details are not described herein again.

In FIG. 5, $M_0$ or $\omega$ in six Keplerian elements of each satellite is different. In this case, the satellites revolve around the earth annularly in a same orbit plane. When communicating with the satellites, the terminal device sequentially communicates with the terminal devices in a revolution direction of the satellites. In addition, the satellites establish an inter-satellite link having a high communication rate. The inter-satellite link is a communication link between the satellites. The inter-satellite link is used for communication between two satellites in a same orbit plane. Because a relative position is fixed, compared with establishment of an inter-satellite link between two satellites in different orbit planes, establishment of the inter-satellite link between the two satellites in the same orbit plane is easier. Therefore, such an inter-satellite link has a better rate and better stability.

When the hyper cell in FIG. 5 communicates with the terminal device, because a plurality of satellites in the hyper cell not only have a same time-frequency resource, but also have a same cell identifier, after the satellites complete step S201, when the terminal device communicates with each satellite in the accessed cell set, a probability of cell handover or reselection caused by satellite revolution can be reduced, so that communication efficiency and reliability of the non-terrestrial communication network are improved, a quantity of measurement times of the terminal device can be reduced, and power consumption of the terminal device is improved.

For example, FIG. 6 is a third diagram of an application scenario to which a communication method according to an embodiment of this application is applicable. When the transmission point in FIG. 4 is a satellite, the scenario shown in FIG. 6 is obtained. In FIG. 6, a coverage area of a cell set to which satellites belong is fixed relative to the ground. To be specific, the satellites in the cell set are moving, and a coverage area of any satellite a in the cell set at a moment $t_1$ is the same as a coverage area of a satellite b at a moment $t_0$. It can be learned that a coverage area of the entire cell set is fixed when observed at a fixed moment (for example, $t_0$ or $t_1$). The moment $t_0$ is a moment before the moment $t_1$ and the satellite b is an adjacent satellite of the satellite a in a satellite orbit direction.

When the cell set is a non-hyper cell, because the satellites move regularly, the coverage areas of the cell set remain unchanged regularly. Therefore, after the satellite a and the satellite b complete step S201, frequency of adjusting the time-frequency resource by a terminal device in the coverage areas of the cell set is reduced. When the communication method in FIG. 2 is applied to the application scenario in FIG. 6, frequency of sending signaling related to time-frequency resource adjustment is reduced, and signaling exchange between the cell set and the terminal device can be reduced, so that communication efficiency and reliability of the non-terrestrial communication network are improved, signaling overheads for measurement of the terminal device can be reduced, and power consumption of the terminal device is reduced.

When the cell set is a hyper cell, a plurality of satellites in the hyper cell not only have a same time-frequency resource, but also have a same cell identifier. After the satellite a and the satellite b complete step S201, a plurality of non-terrestrial transmission points in the hyper cell not only have a same time-frequency resource, but also have a same cell identifier. Because of a high communication rate of an inter-satellite link, when the terminal device communicates with the non-terrestrial transmission point in the accessed cell set, bottom-layer handover may be performed by using L1 and L2 signaling, to avoid L3 handover. In this way, a probability of L3 cell handover or cell reselection can be reduced, so that communication efficiency and reliability of the non-terrestrial communication network are improved, and power consumption of the terminal device is reduced.

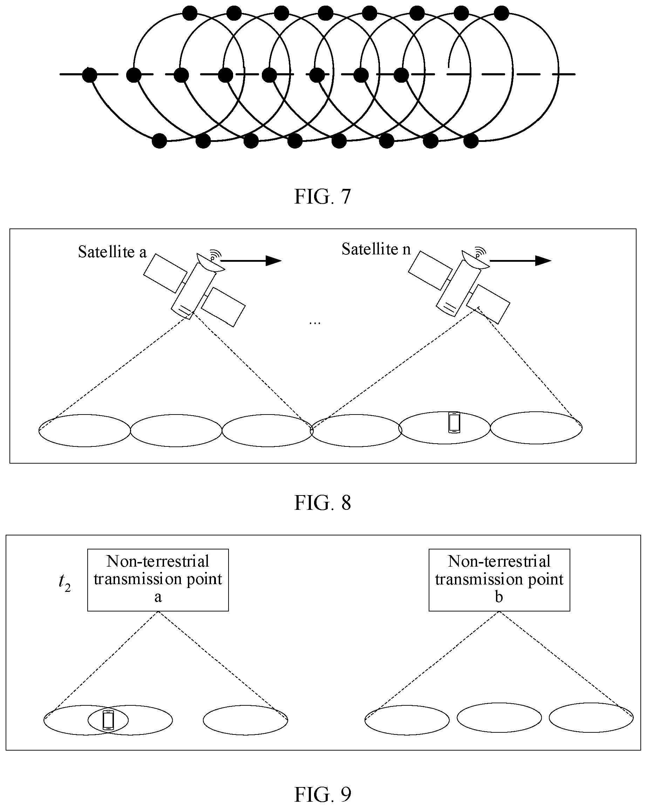

For example, FIG. 7 is a second diagram of a moving trajectory of a satellite according to an embodiment of this application. When an orbit of the satellite in FIG. 6 is fixed, a diagram of the orbit is shown in FIG. 7. In FIG. 7, coverage areas of a same cell set for the ground are fixed, and a meaning of the fixed coverage areas is the same as that of the fixed coverage areas in FIG. 6. Details are not described herein again.

In FIG. 5, the satellites have a same moving trajectory in a same area, and adjacent satellites in a same cell set need to satisfy:

$$\frac{\Delta AOP}{\omega_s} = \frac{\Delta RAAN}{\omega_e}.$$

$\Delta RAAN$ is an angular interval between ascending nodes of the adjacent satellites, $\Delta AOP$ is a true anomaly interval between the satellites, $\omega_s$ is an angular velocity of the satellite revolving around the earth, and $\omega_e$ is an angular velocity of earth rotation. When a more accurate orbit parameter is used for description, the adjacent satellites may further satisfy:

$$\frac{\Delta AOP}{\omega_s + M_0 + \dot{\omega}} = \frac{\Delta RAAN}{\omega_e - \dot{\Omega}}.$$

$\dot{\Omega}$ is an orbital perturbation of a right ascension of the ascending node, $M_0$ is an orbital perturbation of a mean anomaly, and $\dot{\omega}$ is an orbital perturbation of an argument of perigee. $\Delta RAAN$ is an angular interval between ascending nodes of the adjacent satellites, and may be understood as a difference between ascending node angles of the adjacent satellites. $\Delta AOP$ is a true anomaly interval between the adjacent satellites, and may be understood as a phase difference between positions of two adjacent satellites in respective orbits revolving around the earth.

Compared with FIG. 5 and FIG. 7, in FIG. 5, parameters of the satellites satisfy: $M_0$ or $\omega$ is different, other parameters $\{a,e,i,\Omega,\omega,M_0,\Delta AOP,\Delta RAAN\}$ and the satellites form the hyper cell. When the communication method in FIG. 2 is applied to the application scenario in FIG. 5, frequency of cell handover or cell reselection caused by satellite revolution can be reduced.

It may be understood that during communication between the satellite and the terminal device, when different satellites in a same orbit communicate with the terminal device, angles of transmit beams of the different satellites relative to the terminal device change due to earth rotation. Consequently, a transmission environment changes, a quantity of measurement times of the terminal device is increased, and power consumption of the terminal device is increased.

In addition, when the satellite communicates with the terminal device, handover between satellites in different orbits occurs, satellite transmit beams change in different orbits, or another case exists. Therefore, signaling needs to be used to complete satellite handover in different orbits, and signaling overheads are high.

When a condition that each satellite in FIG. 5 satisfies is replaced with that an adjacent satellite in the hyper cell satisfies $\frac{\Delta AOP}{\omega_s} = \frac{\Delta RAAN}{\omega_e}$, and when the cell set in FIG. 7 is a hyper cell, the coverage areas of the cell set to which the satellite belongs are fixed relative to the ground. In this way, cell handover caused by earth rotation can be reduced, signaling overheads caused by the change in the angles of the transmit beams of the different satellites relative to the terminal device are reduced, and signaling overheads caused by the handover between the satellites in the different orbits are reduced.

Optionally, when $\Delta RAAN$ and $\Delta AOP$ are the same between the adjacent satellites, a same time-frequency resource of the satellites may be supported. In this case, deployment of the satellites in the cell set is completed. It may be understood that, a state in which $\Delta RAAN$ and $\Delta AOP$ are different between the adjacent satellites is an intermediate state in which deployment in the cell set is completed.

For example, FIG. 8 is a fourth diagram of an application scenario to which a method according to an embodiment of this application is applicable. In the application scenario shown in FIG. 8, when satellites are in an orbital condition shown in FIG. 7, and adjacent satellites still satisfy that $\frac{\Delta AOP}{\Delta RAAN}$ is a rational number, coverage areas of the satellites on the ground are contiguous.

In FIG. 8, when a cell set is a non-hyper cell, a satellite a and a satellite b in the cell set satisfy the foregoing condition, and the satellite b is adjacent to the satellite a. Coverage areas of the satellite a and the satellite b are contiguous. When the terminal device moves in the contiguous satellite coverage areas, after the satellite in the cell set completes step S201 in the communication method shown in FIG. 2, frequency of adjusting a time-frequency resource can be reduced, frequency of sending signaling related to time-frequency resource adjustment is reduced, and signaling exchange between the cell set and the terminal device can be reduced, so that communication efficiency and reliability of a communication system are improved, signaling overheads related to a quantity of measurement times of the terminal device can be reduced, and power consumption of the terminal device is reduced.

It may be understood that, theoretically, when a value of $\frac{\Delta AOP}{\Delta RAAN}$ of adjacent satellites is an integer, coverage areas of different satellites on the ground are contiguous, in other words, the coverage areas are connected sequentially to each other. However, due to impact of an orbital perturbation, it is very difficult and not necessary to ensure that the value of $\frac{\Delta AOP}{\Delta RAAN}$ of the adjacent satellites is an integer in engineering. Therefore, when $\frac{\Delta AOP}{\Delta RAAN}$ is close enough to an integer, complexity of satellite networking is reduced. For example, a quantity of satellites and complexity of signaling exchange between the satellites are reduced.

In FIG. 8, when a cell set is a hyper cell, a satellite a in the cell set and a satellite adjacent to the satellite a in a satellite moving direction satisfy the foregoing condition: $\frac{\Delta AOP}{\Delta RAAN}$ is a rational number. In this case, coverage areas of adjacent satellites are sequentially contiguous, and for the cell set, the satellites are connected sequentially to each other to form a ring. In other words, coverage areas of a first satellite a and coverage areas of a last satellite n in the cell set are also connected sequentially to each other. The first satellite herein may be randomly selected, and the last satellite is an adjacent satellite that is of the first satellite and that moves in a direction opposite to the satellite moving direction. When the terminal device moves in the contiguous satellite coverage areas, after the satellite in the cell set completes step S201 in the communication method shown in FIG. 2, bottom-layer handover may be performed by using L1 and L2 signaling, to avoid L3 handover. In this way, a probability of L3 cell handover or cell reselection can be reduced, so that communication efficiency and reliability of the non-terrestrial communication network are improved, and power consumption of the terminal device is reduced.

For example, FIG. 9 is a fifth diagram of an application scenario to which a communication method according to an embodiment of this application is applicable. At any moment, coverage areas of at least two transmission points in a plurality of non-terrestrial transmission points are contiguous.

In the application scenario shown in FIG. 9, at a moment $t_2$ when the non-terrestrial transmission point moves, coverage areas of one non-terrestrial transmission point a in a cell set are contiguous. Optionally, that the coverage areas are contiguous includes one or more of the following cases: The coverage areas overlap, partially overlap, or are connected.

In the application scenario shown in FIG. 9, when the cell set is a non-hyper cell, after the terminal device completes step S201 shown in FIG. 2 in the contiguous coverage areas, regardless of which transmission point corresponding to the contiguous coverage areas is accessed, frequency of adjusting a time-frequency resource can be reduced, and frequency of sending signaling related to time-frequency resource adjustment is reduced. In this way, signaling exchange between the cell set and the terminal device can be reduced, so that communication efficiency and reliability of a communication system are improved, signaling overheads for measurement of the terminal device can be reduced, and power consumption of the terminal device is reduced.

In the application scenario shown in FIG. 9, when the cell set is a hyper cell, after the terminal device completes step S201 shown in FIG. 2 in the contiguous coverage areas, bottom-layer handover may be performed by using L1 and L2 signaling, to avoid L3 handover. In this way, a probability of L3 cell handover or cell reselection can be reduced, so that communication efficiency and reliability of the non-terrestrial communication network are improved, and power consumption of the terminal device is reduced.

Optionally, when the non-terrestrial transmission point is an uncrewed aerial vehicle, a HAPS, or a water surface ship, a moving trajectory of the foregoing non-terrestrial transmission point may be controlled, to ensure that coverage areas of at least two transmission points are contiguous.

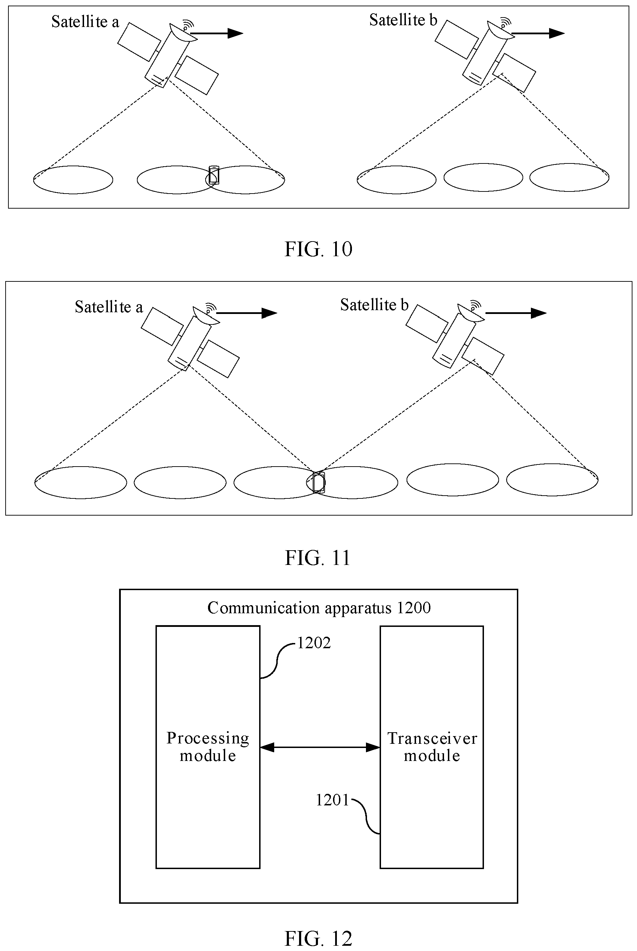

For example, FIG. 10 is a sixth diagram of an application scenario to which a communication method according to an embodiment of this application is applicable. When the non-terrestrial transmission point in FIG. 9 is a satellite, and coverage areas of a satellite a in the cell set are contiguous, the application scenario shown in FIG. 10 is obtained.

For example, FIG. 11 is a seventh diagram of an application scenario to which a communication method according to an embodiment of this application is applicable. When the non-terrestrial transmission point in FIG. 9 is a satellite, and coverage areas of a satellite a and coverage areas of a satellite b in the cell set are contiguous, the application scenario shown in FIG. 9 is obtained. The satellite b is adjacent to the satellite a.

In the application scenarios shown in FIG. 10 and FIG. 11, when the cell set is a non-hyper cell, after the terminal device completes step S201 shown in FIG. 2 in the contiguous coverage areas, regardless of which transmission point corresponding to the contiguous coverage areas is accessed, the terminal device does not adjust a time-frequency resource, and frequency of sending signaling overheads related to time-frequency resource adjustment is reduced. In this way, signaling exchange between the cell set and the terminal device can be reduced, so that communication efficiency and reliability of a communication system are improved, signaling overheads for measurement of the terminal device can be reduced, and power consumption of the terminal device is reduced.

In the application scenarios shown in FIG. 10 and FIG. 11, when the cell set is a hyper cell, after the terminal device completes step S201 shown in FIG. 2 in the contiguous coverage areas, because of high communication rate of an inter-satellite link, when the terminal device communicates with a non-terrestrial transmission point in the accessed cell set, bottom-layer handover may be performed by using L1 and L2 signaling, to avoid L3 handover. In this way, a probability of L3 cell handover or cell reselection can be reduced, so that communication efficiency and reliability of the non-terrestrial communication network are improved, and power consumption of the terminal device is reduced.

The foregoing mainly describes the solutions and applicable scenarios provided in embodiments of this application. Correspondingly, embodiments of this application further provide a communication apparatus. It may be understood that, to implement the foregoing functions, the communication apparatus includes a corresponding hardware structure and/or software module for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes outside the scope of this application.

The following describes, with reference to FIG. 12 to FIG. 15, a communication apparatus for the communication method provided in embodiments of this application.

For example, FIG. 12 is a first diagram of a structure of a communication apparatus according to an embodiment of this application. As shown in FIG. 12, the communication apparatus 1200 includes a transceiver module 1201 and a processing module 1202. For ease of description, FIG. 12 merely shows main components of the communication apparatus.

In some embodiments, the communication apparatus 1200 is applicable to the communication system shown in FIG. 1, and performs a function of sending information about a cell set and a function of performing communication between the cell set and a terminal device in the communication method shown in FIG. 2. In addition, the communication apparatus 1200 is applicable to any application scenario and orbit shown in FIG. 4 to FIG. 11.

The transceiver module 1201 is configured to send the information about the cell set, where the information about the cell set includes identification information of the cell set, resource configuration information of the cell set, and position information of at least one transmission point in a plurality of non-terrestrial transmission points.

The processing module 1202 is configured to perform communication between the cell set and the terminal device.

Optionally, a coverage area of the cell set corresponding to the communication apparatus 1200 is fixed relative to the ground.

Optionally, in the communication apparatus 1200, at any moment, coverage areas of at least two transmission points in the plurality of non-terrestrial transmission points are contiguous.

Optionally, the non-terrestrial transmission point corresponding to the communication apparatus 1200 includes a satellite.

Optionally, adjacent satellites corresponding to the communication apparatus 1200 may satisfy:

$$\frac{\Delta AOP}{\omega_s} = \frac{\Delta RAAN}{\omega_e}$$

. $\Delta RAAN$ is an angular interval between ascending nodes of the adjacent satellites, $\Delta AOP$ is a true anomaly interval between the adjacent satellites, $\omega_s$ is an angular velocity of the satellite revolving around the earth, and $\omega_e$ is an angular velocity of earth rotation. When a more accurate orbit parameter is used for description, the adjacent satellites may further

satisfy: $\dfrac{\Delta AOP}{\omega_s + M_0 + \dot{\omega}} = \dfrac{\Delta RAAN}{\omega_e - \dot{\Omega}}$ . $\dot{\Omega}$ is an orbital perturbation of a right ascension of the ascending node, $M_0$ is an orbital perturbation of a mean anomaly, and $\dot{\omega}$ is an orbital perturbation of an argument of perigee.

Optionally, the adjacent satellites corresponding to the communication apparatus 1200 may further

satisfy: $\dfrac{\Delta AOP}{\Delta RAAN}$ is a rational number.

Optionally, the transceiver module 1201 is configured to send first position information and position variation information of the plurality of non-terrestrial transmission points, where the position variation information is variation information of the plurality of non-terrestrial transmission points relative to the first position information.

It should be understood that the transceiver module 1201 in the communication apparatus 1200 may be implemented by a transmitter or a transmitter-related circuit component, and may be a transmitter or a sending unit. The processing module 1202 may be implemented by a processor or a processor-related circuit component, and may be a processor or a processing unit.

It should be noted that the communication apparatus 1200 may be a non-terrestrial transmission point that belongs to a same cell set in a non-terrestrial communication network, for example, a satellite, an uncrewed aerial vehicle, a HAPS, or a water surface ship, or may be a chip (system) or another part or component that may be disposed in the satellite, the uncrewed aerial vehicle, the HAPS, or the water surface ship, or may be an apparatus including the satellite, the uncrewed aerial vehicle, the HAPS, or the water surface ship. This is not limited in this application.

In addition, for technical effects of the communication apparatus 1200, refer to the technical effects of the communication method shown in any one of FIG. 2. Details are not described herein again.

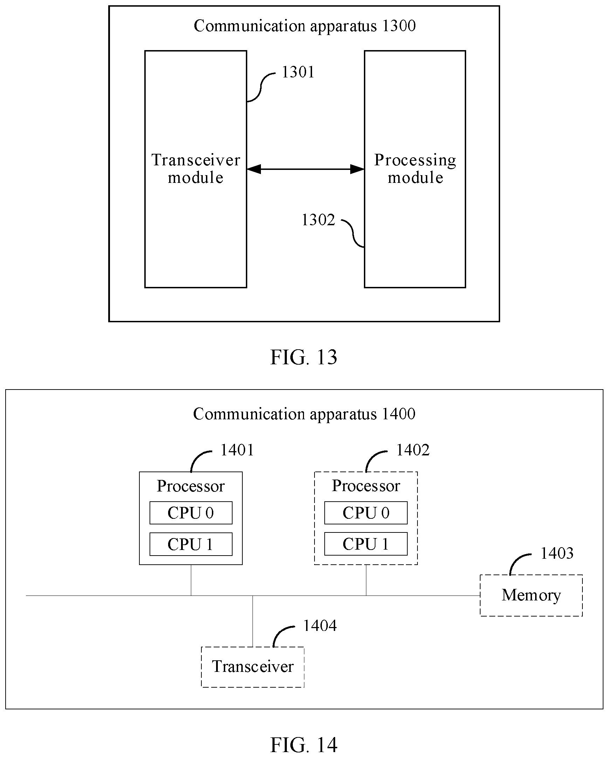

For example, FIG. 13 is a second diagram of a structure of a communication apparatus according to an embodiment of this application. As shown in FIG. 13, the communication apparatus 1300 includes a transceiver module 1301 and a processing module 1302.

For ease of description, FIG. 13 merely shows main components of the communication apparatus.

In some embodiments, the communication apparatus 1300 is applicable to the communication system shown in FIG. 1, and performs a function of obtaining information about a cell set and a function of performing communication between the cell set and a terminal device in the communication method shown in FIG. 2. In addition, the communication apparatus 1300 is applicable to the application scenarios and the orbits shown in FIG. 4 to FIG. 11.

The transceiver module 1301 is configured to obtain the information about the cell set. The cell set includes a plurality of non-terrestrial transmission points, and the information about the cell set includes identification information of the cell set, resource configuration information of the cell set, and position information of at least one transmission point in the plurality of non-terrestrial transmission points.

The processing module 1302 is configured to send an access message, where the access message includes information about a specified transmission point in the plurality of non-terrestrial transmission points that the terminal device accesses.

Optionally, the processing module 1302 is configured to access a cell set having longest remaining coverage time in a plurality of cell sets, where the remaining coverage time is determined based on information about each cell set.

Optionally, a coverage area of the cell set corresponding to the communication apparatus 1300 is fixed relative to the ground.

Optionally, in the communication apparatus 1300, at any moment, coverage areas of at least two transmission points in the plurality of non-terrestrial transmission points are contiguous.

Optionally, the transceiver module 1301 may be configured to obtain first position information and position variation information of the plurality of non-terrestrial transmission points, where the position variation information is variation information of the plurality of non-terrestrial transmission points relative to the first position information.

It should be understood that the transceiver module 1301 in the communication apparatus 1300 may be implemented by a processor or a processor-related circuit component, and may be a processor or a processing unit. The processing module 1302 may be implemented by a transceiver or a transceiver-related circuit component, and may be a transceiver or a transceiver unit. The transceiver module 1301 and the processing module 1302 may be integrated into a same processing module.

It should be noted that, the communication apparatus 1300 may be a terminal device, may be a chip (system) or another part or component that may be disposed in the terminal device, or may be an apparatus including the terminal device. This is not limited in this application.

In addition, for technical effects of the communication apparatus 1300, refer to the technical effects of the communication method shown in any one of FIG. 2. Details are not described herein again.

For example, FIG. 14 is a third diagram of a structure of a communication apparatus according to an embodiment of this application. As shown in FIG. 14, the communication apparatus 1400 includes a processor 1401. The processor 1401 may be coupled to a memory (not shown in FIG. 14), and the processor is configured to perform the communication method shown in FIG. 2.

For ease of description, FIG. 14 merely shows main components of the communication apparatus.

In some embodiments, the communication apparatus 1400 is applicable to the communication system shown in FIG. 1, and perform the communication method shown in FIG. 2. In addition, the communication apparatus 1400 is applicable to the application scenarios shown in FIG. 4 to FIG. 11.

Optionally, the communication apparatus 1400 may further include a memory 1403.

The memory 1403 is configured to store computer instructions. When the processor 1401 executes the computer instructions, the communication apparatus 1400 is enabled to perform any communication method provided in FIG. 2.

The following specifically describes the components of the communication apparatus 1400 with reference to FIG. 14.

A processor is a control center of the communication apparatus 1400, and may be the processor 1401, or may be a general term of a plurality of processing elements. For example, the processor is one or more central processing units (central processing units, CPUs) or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1401 may perform various functions of the communication apparatus 1400 by running or executing a software program stored in the memory 1403 and invoking data stored in the memory 1403.

In a specific implementation, in an embodiment, the processor may include one or more CPUs, for example, a CPU 0 and a CPU 1 shown in FIG. 14.

In a specific implementation, in an embodiment, the communication apparatus 1400 may also include a plurality of processors, for example, the processor 1401 and a processor 1402 (shown by dashed lines in FIG. 14) shown in FIG. 14. Each of the processors may be a single-core (single-CPU) processor, or may be a multi-core (multi-CPU) processor. The processor herein may be one or more devices, circuits, and/or processing cores configured to process data (for example, computer program instructions).

The memory 1403 is configured to store a software program for performing the solutions in this application, and the processor 1401 and the processor 1402 control execution of the software program. For a specific implementation, refer to the foregoing method embodiments. Details are not described herein again.

Optionally, the memory 1403 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 1403 may be integrated with the processor 1401, or may exist independently, and is coupled to the processor 1401 by using an interface circuit (not shown in FIG. 14) of the communication apparatus 1400. This is not specifically limited in embodiments of this application.

Optionally, the communication apparatus 1400 further includes a transceiver 1404. The transceiver 1404 is configured to communicate with another communication apparatus. For example, the communication apparatus 1400 is a terminal device, and the transceiver 1404 may be configured to communicate with a non-terrestrial transmission point that belongs to a same cell set in a non-terrestrial communication network, or communicate with another terminal device. For another example, the communication apparatus 1400 is a non-terrestrial transmission point that belongs to a same cell set in a non-terrestrial communication network, and the transceiver 1404 may be configured to communicate with a terminal device, communicate with another non-terrestrial transmission point that belongs to the same cell set in the non-terrestrial communication network, or communicate with a non-terrestrial transmission point in another non-terrestrial communication network.

Optionally, the transceiver 1404 may include a receiver and a transmitter (not separately shown in FIG. 14). The receiver is configured to implement a receiving function, and the transmitter is configured to implement a sending function.

Optionally, the transceiver 1404 may be integrated with the processor 1401, or may exist independently, and is coupled to the processor 1401 by using the interface circuit (not shown in FIG. 14) of the communication apparatus 1400. This is not specifically limited in embodiments of this application.

It should be noted that the structure of the communication apparatus 1400 shown in FIG. 14 does not constitute a limitation on the communication apparatus. An actual communication apparatus may include more or fewer components than those shown in the figure, combine some components, or have different component arrangement.

It should be noted that, the communication apparatus 1400 may be a terminal device, may be a chip (system) or another part or component that may be disposed in the terminal device, or may be an apparatus including the terminal device. This is not limited in this application. The communication apparatus 1400 may alternatively be a non-terrestrial transmission point that belongs to the same cell set in the non-terrestrial communication network, for example, a satellite, an uncrewed aerial vehicle, a HAPS, or a water surface ship, or may be a chip (system) or another part or component that may be disposed in the non-terrestrial transmission point, or may be an apparatus including the non-terrestrial transmission point. This is not limited in this application.

In addition, for technical effects of the communication apparatus 1400, refer to the technical effects of the communication method shown in FIG. 2. Details are not described herein again.

Moreover, for the technical effects of the communication apparatus 1400, refer to the technical effects of the communication method in the foregoing method embodiments. Details are not described herein again.

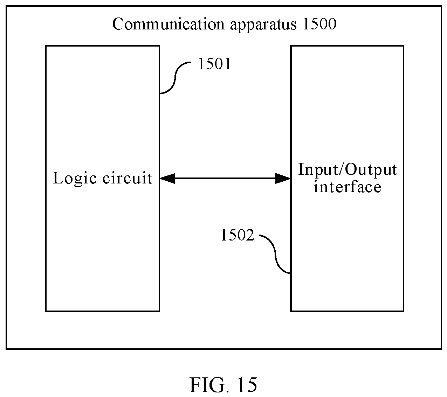

For example, FIG. 15 is a fourth diagram of a structure of a communication apparatus according to an embodiment of this application. As shown in FIG. 15, the communication apparatus 1500 includes a logic circuit 1501 and an input/output interface 1502.

The input/output interface 1502 is configured to perform sending and receiving operations in any method shown in FIG. 2.

The logic circuit 1501 is configured to perform the communication method shown in FIG. 2 and any method provided in any possible design manner of the communication method.

For ease of description, FIG. 15 merely shows main components of the communication apparatus 1500.

In some embodiments, the communication apparatus 1500 is applicable to the communication system shown in FIG. 1, and perform the communication method shown in FIG. 2. In addition, the communication apparatus 1500 is applicable to the application scenarios shown in FIG. 4 to FIG. 11.

An embodiment of this application provides a communication system. The communication system includes the foregoing one or more non-terrestrial transmission points.

Optionally, the communication system includes a plurality of non-terrestrial transmission points, and the plurality of non-terrestrial transmission points in a same cell set have a same time-frequency resource. The communication system is configured to perform the communication method shown in FIG. 2, and the communication system is applicable to the application scenarios shown in FIG. 4 to FIG. 11.

It should be understood that, a processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or a transistor logic device, a discrete hardware component, or the like. The general-purpose processor may be a microprocessor, or the processor may be any conventional processor or the like.

It may also be understood that a memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example but not limited description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes outside the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applicable to a terminal device, wherein the communication method comprises:

   obtaining information about a cell set, wherein the cell set comprises a plurality of non-terrestrial transmission points, the plurality of non-terrestrial transmission points have a same time-frequency resource, and the information about the cell set comprises identification information of the cell set, resource configuration information of the cell set, and position information of at least one transmission point in the plurality of non-terrestrial transmission points; and
   accessing the cell set.

2. The communication method according to claim 1, wherein the accessing the cell set comprises:
   accessing a cell set having longest remaining coverage time in a plurality of cell sets, wherein the remaining coverage time is determined based on information about each cell set.

3. The communication method according to claim 2, wherein a coverage area of the cell set is fixed relative to the ground.

4. The communication method according to claim 1, wherein at any moment, coverage areas of at least two transmission points in the plurality of non-terrestrial transmission points are contiguous.

5. The communication method according to any one of claims 1 to 4, wherein the position information of the at least one transmission point comprises:
first position information and position variation information of the plurality of non-terrestrial transmission points, wherein the position variation information is variation information of the plurality of non-terrestrial transmission points relative to the first position information.

6. A communication method, applicable to a non-terrestrial communication network, wherein the non-terrestrial communication network comprises a cell set, the cell set comprises a plurality of non-terrestrial transmission points, the plurality of non-terrestrial transmission points have a same time-frequency resource, and the communication method comprises:

   sending information about the cell set, wherein the information about the cell set comprises identification information of the cell set, resource configuration information of the cell set, and position information of at least one transmission point in the plurality of non-terrestrial transmission points; and
   communicating with a terminal device.

7. The communication method according to claim 6, wherein a coverage area of the cell set is fixed relative to the ground.

8. The communication method according to claim 6, wherein at any moment, coverage areas of at least two transmission points in the plurality of non-terrestrial transmission points are contiguous.

9. The communication method according to any one of claims 6 to 8, wherein the non-terrestrial transmission point comprises a satellite.

10. The communication method according to claim 9, wherein adjacent satellites satisfy:

$$\frac{\Delta AOP}{\omega_s} = \frac{\Delta RAAN}{\omega_e},$$

wherein $\Delta RAAN$ is an angular interval between ascending nodes of the adjacent satellites, $\Delta AOP$ is a true anomaly interval between the adjacent satellites, $\omega_s$ is an angular velocity of the satellite revolving around the earth, and $\omega_e$ is an angular velocity of earth rotation.

11. The communication method according to claim 10, wherein the adjacent satellites further satisfy:

$$\frac{\Delta AOP}{\omega_s + M_0 + \dot\omega} = \frac{\Delta RAAN}{\omega_e - \dot\Omega},$$

wherein $\dot\Omega$ is an orbital perturbation of a right ascension of the ascending node, $M_0$ is an orbital perturbation of a mean anomaly, and $\dot\omega$ is an orbital perturbation of an argument of perigee.

12. The communication method according to claim 11, wherein the adjacent satellites further satisfy:

$$\frac{\Delta AOP}{\Delta RAAN}$$ is a rational number.

13. The communication method according to any one of claims 6 to 12, wherein the position information of the at least one transmission point comprises:
first position information and position variation information of the plurality of non-terrestrial transmission points, wherein the position variation information is variation information of the plurality of non-terrestrial transmission points relative to the first position information.

14. A communication apparatus, applicable to a terminal device, wherein the communication apparatus comprises a transceiver module and a processing module, wherein

the transceiver module is configured to obtain information about a cell set, wherein the cell set comprises a plurality of non-terrestrial transmission points, the plurality of non-terrestrial transmission points have a same time-frequency resource, and the information about the cell set comprises identification information of the cell set, resource configuration information of the cell set, and position information of at least one transmission point in the plurality of non-terrestrial transmission points; and
the processing module is configured to access the cell set.

15. The communication apparatus according to claim 14, wherein the processing module is configured to:
access a cell set having longest remaining coverage time in a plurality of cell sets, wherein the remaining coverage time is determined based on information about each cell set.

16. The communication apparatus according to claim 14, wherein a coverage area of the cell set is fixed relative to the ground.

17. The communication apparatus according to claim 14, wherein at any moment, coverage areas of at least two transmission points in the plurality of non-terrestrial transmission points are contiguous.

18. The communication apparatus according to any one of claims 14 to 17, wherein the transceiver module is configured to:
obtain first position information and position variation information of the plurality of non-terrestrial transmission points, wherein the position variation information is variation information of the plurality of non-terrestrial transmission points relative to the first position information.

19. A communication apparatus, applicable to a non-terrestrial communication network, wherein the non-terrestrial communication network comprises a cell set, the cell set comprises a plurality of non-terrestrial transmission points, the plurality of non-terrestrial transmission points have a same time-frequency resource, and the communication apparatus comprises a transceiver module and a processing module, wherein

the transceiver module is configured to send information about the cell set, wherein the information about the cell set comprises identification information of the cell set, resource configuration information of the cell set, and position information of at least one transmission point in the plurality of non-terrestrial transmission points; and
the processing module is configured to communicate with a terminal device.

20. The communication apparatus according to claim 19, wherein a coverage area of the cell set is fixed relative to the ground.

21. The communication apparatus according to claim 19, wherein at any moment, coverage areas of at least two transmission points in the plurality of non-terrestrial transmission points are contiguous.

22. The communication apparatus according to any one of claims 19 to 21, wherein the non-terrestrial transmission point comprises a satellite.

23. The communication apparatus according to claim 22, wherein adjacent satellites satisfy:

$$\frac{\Delta AOP}{\omega_s} = \frac{\Delta RAAN}{\omega_e},$$

wherein $\Delta RAAN$ is an angular interval between ascending nodes of the adjacent satellites, $\Delta AOP$ is a true anomaly interval between the adjacent satel-

lites, $\omega_s$ is an angular velocity of the satellite revolving around the earth, and $\omega_e$ is an angular velocity of earth rotation.

24. The communication apparatus according to claim 23, wherein the adjacent satellites further satisfy:

$$\frac{\Delta AOP}{\omega_s + M_0 + \dot{\omega}} = \frac{\Delta RAAN}{\omega_e - \dot{\Omega}},$$

wherein $\dot{\Omega}$ is an orbital perturbation of a right ascension of the ascending node, $M_0$ is an orbital perturbation of a mean anomaly, and $\dot{\omega}$ is an orbital perturbation of an argument of perigee.

25. The communication apparatus according to claim 24, wherein the adjacent satellites further satisfy: $\dfrac{\Delta AOP}{\Delta RAAN}$ is a rational number.

26. The communication apparatus according to any one of claims 19 to 25, wherein the transceiver module is configured to:
send first position information and position variation information of the plurality of non-terrestrial transmission points, wherein the position variation information is variation information of the plurality of non-terrestrial transmission points relative to the first position information.

27. A communication apparatus, wherein the communication apparatus comprises:

a processor, wherein
the processor is coupled to a memory, and the memory stores program instructions, and
when the program instructions stored in the memory are executed by the processor, the processor is configured to perform the communication method according to any one of claims 1 to 5 or claims 6 to 13.

28. A communication apparatus, wherein the communication apparatus comprises an input/output interface and a logic circuit, wherein

the input/output interface is configured to perform sending and receiving operations in the communication method according to any one of claims 1 to 5 or claims 6 to 13; and
the logic circuit is configured to perform the communication method according to any one of claims 1 to 5 or claims 6 to 13.

29. A computer-readable storage medium, wherein when a computer program or instructions are run on a computer, the computer is enabled to perform the communication method according to any one of claims 1 to 5 or claims 6 to 13.

30. A computer program product, wherein the computer program product comprises a computer program or instructions, and when the computer program or the instructions are run on a computer, the computer is enabled to perform the communication method according to any one of claims 1 to 5 or claims 6 to 13.

31. A communication system, wherein the communication system comprises a plurality of non-terrestrial transmission points and a terminal device, the plurality of non-terrestrial transmission points in a same cell set have a same time-frequency resource, the terminal device is configured to perform the communication method according to any one of claims 1 to 5, and the plurality of non-terrestrial transmission points are configured to perform the communication method according to any one of claims 6 to 13.

| Non-terrestrial transmission point | Non-terrestrial transmission point | ... | Non-terrestrial transmission point |

FIG. 1

| Non-terrestrial communication network | | Terminal device |

S201. Information about a cell set

S202. Perform communication

FIG. 2

Cell set B

Cell set A

Terminal device

FIG. 3

$t_0$

| Non-terrestrial transmission point b | → | Another non-terrestrial transmission point |

...   ...

$t_1$

| Non-terrestrial transmission point a | → | Non-terrestrial transmission point b |

...   ...

FIG. 4

FIG. 5

FIG. 6

FIG. 7

FIG. 8

FIG. 9

FIG. 10

FIG. 11

FIG. 12

Communication apparatus 1300

Transceiver module

1301

Processing module

1302

FIG. 13

Communication apparatus 1400

1401

Processor

CPU 0

CPU 1

1402

Processor

CPU 0

CPU 1

1403

Memory

1404

Transceiver

FIG. 14

Communication apparatus 1500

1501

Logic circuit ⟷ Input/Output interface

1502

FIG. 15

<table>
<tr><td colspan="2" align="center">**INTERNATIONAL SEARCH REPORT**</td><td colspan="2">International application No.<br>**PCT/CN2023/073015**</td></tr>
</table>

**A. CLASSIFICATION OF SUBJECT MATTER**

H04W72/00(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, EPTXT, USTXT, VEN, WOTXT, CNKI: 非陆地传输节点, 接入, 节点, 时频资源, 卫星, 相同, 小区集合, access, cell, information, node, NTN, resource, same, set

**C. DOCUMENTS CONSIDERED TO BE RELEVANT**

| Category* | Citation of document, with indication, where appropriate, of the relevant passages | Relevant to claim No. |
|---|---|---|
| X | WO 2019095321 A1 (HUAWEI TECHNOLOGIES CO., LTD.) 23 May 2019 (2019-05-23) description, page 1 line 35-page 2 line 6, page 14 lines 23-32, page 17 lines 1-7, page 25 lines 1-13, and page 27 line 3-page 28 line 38 | 1, 6-7, 14, 16, 19-20, 27-31 |
| A | CN 102612090 A (HUAWEI TECHNOLOGIES CO., LTD.) 25 July 2012 (2012-07-25) entire document | 1-31 |
| A | US 2022046490 A1 (SAMSUNG ELECTRONICS CO., LTD.) 10 February 2022 (2022-02-10) entire document | 1-31 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 March 2023** | **08 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/073015**

| Patent document cited in search report | | | Publication date (day/month/year) | Patent family member(s) | | | Publication date (day/month/year) |
|---|---|---|---|---|---|---|---|
| WO | 2019095321 | A1 | 23 May 2019 | CN | 111328463 | A | 23 June 2020 |
| | | | | EP | 3713326 | A1 | 23 September 2020 |
| | | | | US | 2020314933 | A1 | 01 October 2020 |
| CN | 102612090 | A | 25 July 2012 | None | | | |
| US | 2022046490 | A1 | 10 February 2022 | WO | 2022031133 | A1 | 10 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210255682